# EUROPÄISCHE PATENTANMELDUNG

(11) **EP 1 762 365 A2**
(43) Veröffentlichungstag der Anmeldung: **14.03.2007**
(21) Anmeldenummer: 06018941.2
(22) Anmeldetag: 11.09.2006
(51) Int. Cl.: B29C 47/68

(54) **Vorrichtung an einem Extruder zum seitlichen Zuführen von Füllstoffen**

(30) Priorität: 12.09.2005 DE 102005043867
(71) Anmelder: Reimelt Henschel MischSysteme GmbH, 34127 Kassel (DE)
(72) Erfinder: Rockstedt, Siegward, 1858 Luxembourg (LU)
(74) Vertreter: Freiherr von Schorlemer, Reinfried

(57) **Zusammenfassung**

Es wird ein Extruder mit einer Vorrichtung (8) zur Seiteneinspeisung von Füllstoffen beschrieben. Die Vorrichtung (8) enthält eine mit wenigstens zwei Förderschnecken (20, 21) versehene Fördereinheit, den Förderschnecken (20, 21) zugeordnete Antriebswellen (23, 24) und Antriebsmittel (28 bis 37), die ein vorzugsweise als Zahnriemen-und/oder Schneckentrieb ausgebildetes Förderschneckengetriebe enthalten. Erfindungsgemäß sind die Förderschnecken (20, 21) und die Antriebswellen (23, 24) durch axial fügbare Verbindungsmittel (39, 44) koaxial verbunden und zusätzlich axial gegeneinander verspannt (Fig. 5).

## Beschreibung

Die Erfindung betrifft eine Vorrichtung der im Oberbegriff des Anspruchs 1 angegebenen Gattung.

Misch- oder Knetmaschinen, die auch als Doppelschneckenpressen, Compounder od. dgl- genannt und im Rahmen der vorliegenden Anmeldung allgemein als Extruder bezeichnet werden, dienen insbesondere in der Kunststoffindustrie dem Zweck, einen als Pulver, Granulat, Flüssigkeit od. dgl. zugeführten Rohstoff, z. B. ein Thermoplast, zu fordern, zu verdichten, zu schmelzen bzw. zu plastifizieren, zu mischen und/oder zu kneten, bevor der bearbeitete Rohstoff als mehr oder weniger pastöse oder flüssige Masse durch eine Austragsöffnung ausgetragen wird. Dabei kann das fertige Material z. B. mittels einer Austragsdüse und durch Abkühlung granuliert werden.

Den Rohstoffen werden während unterschiedlicher Verfahrensstufen häufig Füllstoffe in Form von Kreide, Glasfasern oder Talkum zugeführt. Zur Zuführung dieser Füllstoffe dienen insbesondere sogenannte Seitenzuführungen oder Seiteneinspeiser. Darunter werden mit gleichsinnig drehbaren Förderschnecken versehene Vorrichtungen verstanden, mittels derer über einen Einfülltrichter zugeführte Füllstoffe zu seitlich am Extruder angebrachten Zuführungsöffnungen befördert werden. Zum Antrieb der Förderschnecken dienen ein Antriebsmotor und ein zwischen diesem und den Förderschnecken angeordnetes Förderschneckengetriebe, das die von einer Antriebswelle erzeugten Drehmomente und Drehzahlen derart auf die Förderschnecken verteilt, daß sich diese gleichsinnig drehen.

Die Verbindung der Förderschnecken mit den Antriebswellen erfolgt durchweg mit Hilfe von Muffenverbindungen od. dgl., d.h. mit Hilfe von Hülsen, die aufeinander zugewandte Enden der Förderschnecken und Antriebswellen aufgezogen werden. Aufgrund der dabei üblichen Toleranzen sind die Förderschnecken mit einem gewissen Spiel in den sie eng umschließenden Gehäusen gelagert. Das hat zur Folge, daß die Förderschnecken beim Betrieb der Seiteneinspeiser aufgrund der dabei auftreteten Kräfte mit den Gehäusewandungen in Berührung kommen können, wodurch Geräusche auftreten und die Füllstoffe zwischen den Förderschnecken und den umgebenden Gehäusewandungen beschädigt werden können. Die Geräuschentwicklung, die weiter dadurch verstärkt wird, daß die Antriebe für die Förderschnecken in der Regel als Zahnradgetriebe ausgebildet sind, ist insbesondere angesichts bestehender und in Planung befindlicher Arbeitsvorschriften nicht unbeachtlich. Außerdem erschweren übliche Zahnrädergetriebe die Umstellung der Seiteneinspeiser auf andere Drehzahlen.

Ausgehend davon liegt der vorliegenden Erfindung das technische Problem zugrunde, die Vorrichtung der eingangs bezeichneten Gattung so auszubilden, daß die oben erläuterten Nachteile zumindest teilweise vermieden werden.

Zur Lösung dieses Problems dienen die kennzeichnenden Merkmale des Anspruchs 1.

Durch die erfindungsgemäße Verbindung der Förderschnecken mit ihren Antriebswellen unter zusätzlicher axialer Verspannung ergibt sich der Vorteil einer wesentlich besseren koaxialen Ausrichtung. Durch sie wird sichergestellt, daß die Förderschnekken berührungslos und mit so wenig Spiel in dem sie umgebenden Gehäuse umlaufen, daß beim kontinuierlichen Betrieb keine unangenehme Geräuschentwicklung entsteht und auch empfindliche Füllstoffe wie z.B. Glasfasern nicht zwischen den Förderschnecken und den Gehäusewandungen zerrieben werden.

Weitere vorteilhafte Merkmale der Erfindung ergeben sich aus den Unteransprüchen.

Ein besonderer Vorteil der Anwendung von zahnriemen- oder Kettentrieben nach dem Anspruch 7 besteht darin, daß diese ölfrei und damit trocken betrieben werden können, so daß nicht nur das zugehörige Getriebegehäuse einfach und preisgünstig herstellbar, sondern auch ein Drehzahlwechsel durch Austausch von Zahnriemen- oder Kettenrädern leicht möglich ist. Außendem verursachen Zahnriemengetriebe praktisch keine Laufgeräusche, was die Laufruhe weiter fördert.

Die Erfindung wird nachfolgend in Verbindung mit den beiliegenden, in unterschiedlichen Maßstäben gehaltenen Zeichnungen an Ausführungsbeispielen näher erläutert. Es zeigen:
Fig. 1 eine perspektivische Ansicht eines Extruders mit einer erfindungsgemäßen Vorrichtung zur Seiteneinspeisung;
Fig. 2 in einer Seitenansicht schematisch ein Förderschneckengetriebe der Vorrichtung nach Fig. 1;
Fig. 3 einen schematischen Vertikalschnitt längs der Linie III-III der Fig. 1 durch ein Ausführungsbeispiel des Förderschneckengetriebes;
Fig. 4 eine schematische, teilweise geschnittene und vergrößerte Draufsicht auf das Förderschneckengetriebe nach Fig. 2 und 3;
Fig. 5 einen der Fig. 3 entsprechenden Schnitt durch ein zweites Ausführungsbeispiel des Förderschneckengetriebes;
Fig. 6 eine vergrößerte Einzelheit des Förderschneckengetriebes nach Fig. 5 im Bereich der Verbindungsstelle zwischen einer seiner Abtriebswellen und einer zugehörigen Förderschnecke;
Fig. 7 einen der Fig. 5 entsprechenden Schnitt durch das Förderschneckengetriebe nach Fig. 5, jedoch mit einer anderen Ausführungsform für die Verbindung zwischen einer seiner Abtriebswellen und einer zugehörigen Förderschnecke; und
Fig. 8 einen vergrößerten Horizontalschnitt durch das Förderschneckengetriebe längs der Linie VIII-VIII der Fig. 7.

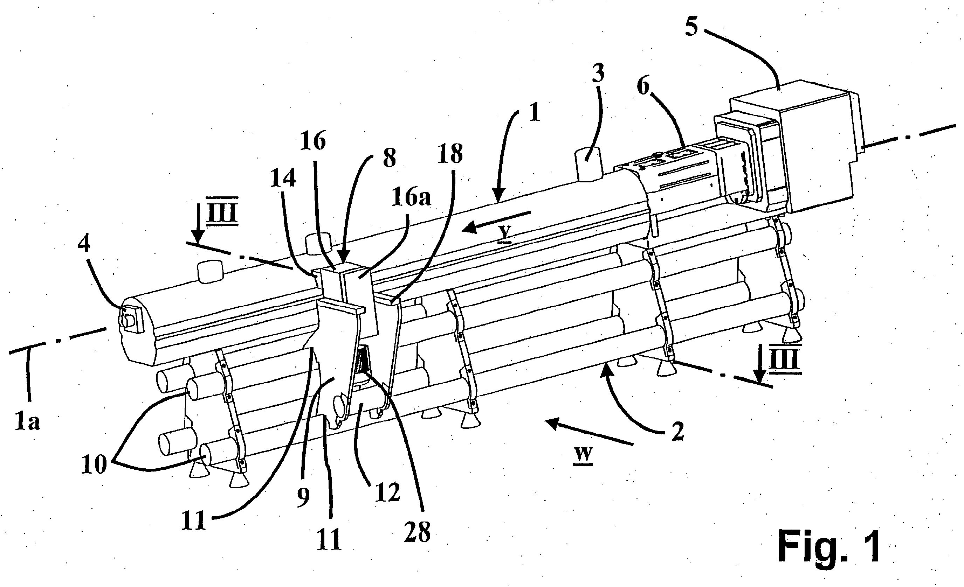

Fig. 1 zeigt einen ingesamt mit dem Bezugszeichen 1 bezeichneten DoppelschneckenExtruder, der auf einem insgesamt mit dem Bezugszeichen 2 versehenen Gestell abgestützt ist. Dem Extruder 1 werden die zu verarbeitenden Rohstoffe, z. B. geeignete Polymere od. dgl., über eine nicht näher dargestellte Einfüllöffnung 3 zugeführt. Innerhalb des Extruders 1 werden die Rohstoffe mit dessen nicht dargestellter, hier eine Doppelschnecke aufweisenden Schneekenanozdnung bearbeitet, z. B, verdichtet, plastifiziert und/oder geknetet und gemischt, und dabei in Richtung eines Pfeils v bzw. parallel zu einer Längsachse 1a des Extruders 1 zu einer Austrittsöffnung 4 befördert, wo es z. B. abgekühlt und granuliert wird.

Zum Antrieb der Doppelschnecke dienen in bekannter Weise z. B. ein Antriebsmotor 5 und ein zwischen diesen und die Doppelschnecke geschaltetes Getriebe 6, die beide auf der zur Austrittsöffnung 4 entgegengesetzten Seite des Extruders 1 angeordnet sind.

In Fig. 1 ist ferner mit dem Bezugszeichen 8 schematisch eine Vorrichtung zur Seiteneinspeisung dargestellt. Die Vorrichtung 8 dient in bekannter Weise dem Zweck, dem Extruder 1 quer zu seiner Längsachse 1a irgendeinen Füllstoff wie z. B. Kreide, Glasfasern oder Talkum zuzuführen. Die Vorrichtung 8 ist im Ausführungsbeispiel zwischen zwei Stützplatten 9 angeordnet und als Ganzes an diesen montiert. Die Stützplatten 9 sind ihrerseits seitlich am Gestell 2 befestigt, wozu das Gestell vorzugsweise wenigstens ein parallel zur Längsachse 1a erstrecktes, rohr- oder stanganförmiges Gestellteil 10 aufweist, während die Stützplatten 9 an ihren dem Gestell 2 zugewandten Seiten mit wenigstens je einer randoffenen Aussparung 11 versehen und mittels dieser an dem Gestellteil 10 aufgehängt sind. Im Ausführungsbeispiel sind zu diesem Zweck zwei derartige Gestellteile 10 und je zwei derartige Aussparungen 11 vorhanden. Zur axialen Festlegung der Stützplatten 9 können mit den Gestellteilen 10 zusammenwirkende, nicht dargestellte Klemmen dienen. Außerdem können die beiden Stützplatten 9 mittels wenigstens eines Abstandhalters 12 auf Abstand gehalten und dadurch zu einer konstruktiv stabilen Baueinheit verbunden werden.

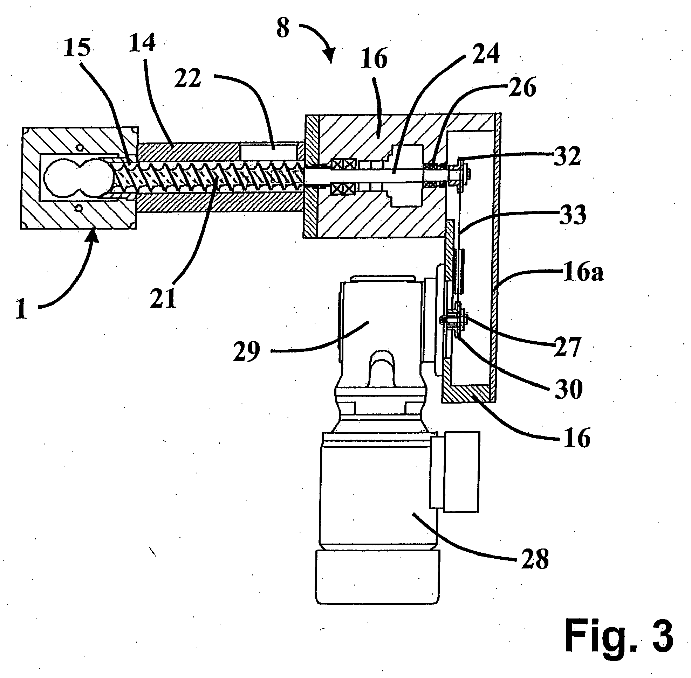

Die Vorrichtung 8 zur Seiteneinspeisung enthält nach Fig. 1 ein Förderschneckengehäuse 14, das an eine seitliche Zuführungsöffnung 15 (Fig. 3) des Extruders 1 angeschlossen ist, und ein Getriebegehäuse 16, das einen zur Außenseite hin abnehrnbaren Deckel 16a aufweist.

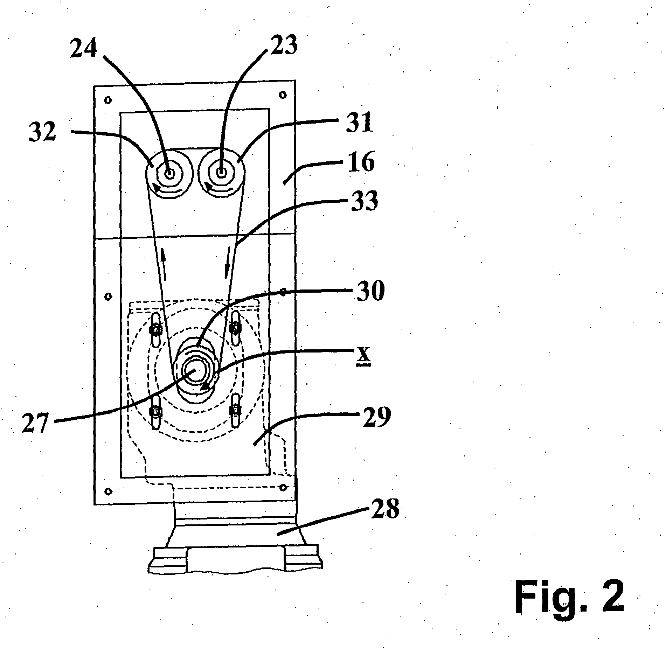

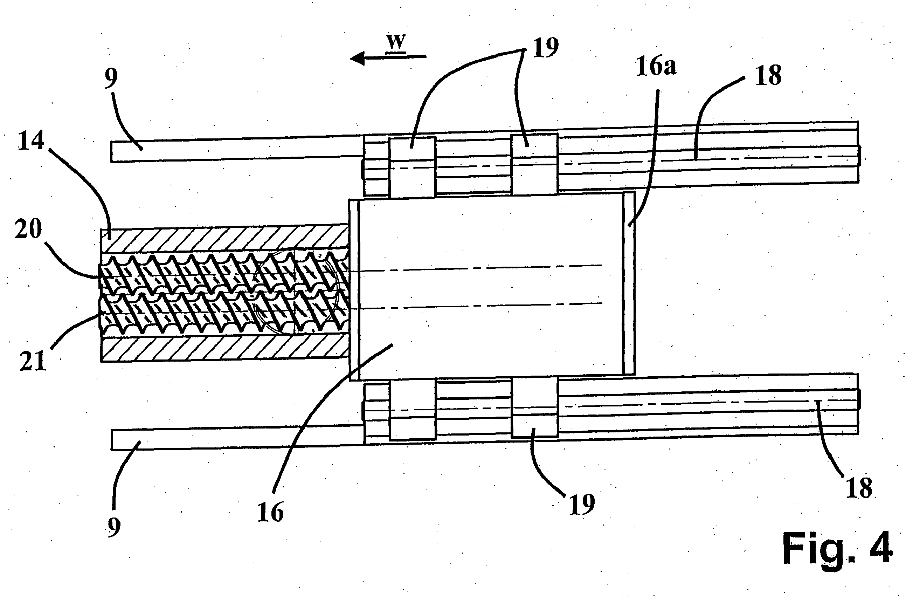

Zur Vereinfachung der Darstellung ist in Fig. 2 nur das Getriebegehäuse 16 der Vorrichtung 8 bei abgenommenen Deckel 16a und ohne die Stützplatten 9 dargestellt, um bei einer Ansicht in Richtung eines Pfeils w der Fig. 1 quer zur Längsachse 1a den Blick auf die wesentlichen Teile eines Förderschneckengetriebes freizugeben. Dagegen zeigt Fig. 3 in einem Vertikalschnitt das Getriebegehäuse 16 mit dem Deckel 16a und das an die Zuführungsöffnung 15 des Extruders 1 angesetzte Förderschnekkengehäuse 14, wobei die Stützplatten 9 ebenfalls weggelassen sind. Schließlich zeigt Fig. 4 das Förderschneckengehäuse 14 und das Getriebegehäuse 16, wobei die beiden Gehäuse 14 und 16 in Richtung des Pfeils w hintereinander angeordnet und durch nicht dargestellte Schrauben od. dgl. vorzugsweise lösbar miteinander verbunden sind.

Gemäß Fig. 4 sind die Stützplatten 9 im oberen Bereich mit quer zur Längsachse 1a verlaufenden, auch in Fig. 1 angedeuteten Tragschienen 18 versehen, auf denen Führungselemente 19 aufliegen, die seitlich über einen Lagerabschnitt des Getriebegehäuses 16 vorstehen und an diesem befestigt sind. Auf diese Weise ist die aus den Gehäusen 14 und 16 bestehende Baueinheit in Richtung des Pfeils w verschiebbar und so auf den Stützplatten 9 abgestützt, daß sie parallel zum Pfeil w in der jeweils erforderlichen Weise auf den in Fig. 4 nicht dargestellten Extruder 1 bzw, dessen seitlich angeordnete Zuführungsöffhung 15 (Fig. 3) ausgerichtet werden kann. In Richtung der Längsachse 1a ist eine Ausrichtung dieser Baueinheit dadurch möglich, daß die Stützplatten 9 auf den Gestellteilen 10 verschoben werden. Auf diese Weise könnte die Vorrichtung 8 auch wahlweise an eine von mehreren Zuführungsöffnungen 15 des Extruders 1 angeschlossen werden.

In dem Schneckengehäuse 14 sind, wie insbesondere Fig. 4 zeigt, zwei Förderschnecken 20 und 21 drehbar gelagert, die den über eine Einfüllöffnung 22 (Fig. 3) zugeführten Füllstoff in Richtung des Pfeils w zum Extruder 1 fördern. Diese Förderschnecken 20, 21 können ein- oder mehrteilig ausgebildet sein und z. B. aus einer Welle und einer auf diese aufgeschobenen Schnecke bestehen. Für die vorliegende Beschreibung werden dagegen der Einfachheit halber einstückige Förderschnecken 20, 21 vorausgesetzt. Die Förderschnecken 20, 21 sind koaxial mit je einer Antriebswelle 23, 24 (Fig. 2) des Förderschneckengetriebes verbunden, wobei in Fig. 3 nur die mit der Förderschnecke 20 verbundene Antriebswelle 23 sichtbar ist. Die Antriebswellen 23, 24 sind im Getriebegehäuse 16 mittels Lagern 26 (Fig. 3) drehbar gelagert und mit ihren Achsen zweckmäßig senkrecht zur Längsachse 1a (Fig. 1) angeordnet.

Bei einem bevorzugten Ausführungsbeispiel der Erfindung enthält das zum Antrieb der Förderschnecken 20, 21 bestimmte Förderschneckengetriebe der Vorrrichtung 8 einen der Leistungsverzweigung dienenden Zahnriemen- und/oder Kettentrieb, wie nachfolgend am Beispiel eines Zahnriementriebs näher erläutert ist. Zu diesem Zweck ist in einem unteren Bereich des Getriebegehäuses 16 (Fig. 2 und 3) eine Eingangswelle 27 des Förderschneckengetriebes drehbar gelagert, die zweckmäßig parallel zu den Förderschnecken 20, 21 und Antriebswellen 23, 24 angeordnet ist und von irgendeiner an den Stützplatten 9 montierten Antriebseinheit angetrieben wird. Diese besteht z. B. aus einem Antriebsmotor 28 und einem Zwischengetriebe 29 herkömmlicher Bauart.

In dem Getriebegehäuse 16 sind insbesondere die der Leistungsverzweigung dienenden und den Zahnriementrieb bildenden Getriebeteile untergebracht, die eine Leistungsverzweigung von der Eingangswelle 27 auf die Antriebswellen 23, 24 vornehmen, um die beiden Antriebswellen 23, 24 und damit auch die beiden mit diesen verbundenen Förderschnecken 20, 21 mit vom Anwendungszweck abhängigen Drehzahlen und Drehmomenten anzutreiben, Diese Getriebeteile enthalten eine auf der Eingangswelle 27 befestigte Zahnriemenscheibe 30 sowie zwei weitere Zahnriemenscheiben 31, 32, die an je einem vom Extruder 1 entfernten Ende einer der Antriebswellen 23 und 24 befestigt sind. Schließlich ist ein Getriebeteil in Form eines mit einer Innenverzahnung versehenen, endlosen Zahnriemens 33 vorhanden, der ohne Umlenkung zumindest teilweise um die Zahnriemenscheiben 30, 31 und 32 gelegt ist. Wird daher die Eingangswelle 27 des Förderschneckengetriebes bzw. deren Zahnriemenscheibe 30 in Richtung eines Pfeils x (Fig. 2) gedreht, dann werden die beiden Zahnriemenscheiben 31 und 32, die sie tragenden beiden Antriebswellen 23, 24 und die beiden mit diesen verbundenen Förderschnecken 20, 21 in derselben Drehrichtung und damit gleichsinnig angetrieben, wie es bei Vorrichtungen zur Seiteneinspeisung allgemein erwünscht und in Fig. 2 durch zusätzliche Pfeile angedeutet ist.

Besonders zweckmäßig ist es, wenn das Förderschneckengetriebe entsprechend Fig. 2 und 3 außer den Eingangs- und Antriebswellen 27, 23 und 24 nur den beschriebenen Zahnriementrieb und insbesondere nur die Zahnriemenscheiben 30 bis 32 und den Zahnriemen 33 enthält. Dadurch wird einerseits eine sehr einfache und kostengünstige Getriebeanordnung ohne Zahnräder od. dgl. erhalten. Andererseits ist es bei Bedarf auf einfache Weise möglich, das Übersetzungsverhältnis zu verändern, indem bei abgenommenem Deckel 16a die Zahnriemenscheiben 30 bis 32 ausgewechselt werden. Bei Bedarf kann eine weitere, schwenkbar angeordnete Zahnriemenscheibe zum Spannen bzw. Entspannen des Zahnriemens 33 vorgesehen werden. Im Ausführungsbeispiel wird die Antriebseinheit 28, 29 zu diesem Zweck mittels der aus Fig. 2 ersichtlichen Langlöcher und Befestigungsschrauben relativ zum Getriebegehäuse 16 nach oben und unten bewegt. Vorteilhaft ist schließlich auch, daß das Förderschnekkengetriebe insgesamt trocken, d. h. ohne jede Schmierung laufen kann, was das Austauschen der Zahnriemenscheiben 30 bis 32 erheblich erleichtert. Ähnliche Vorteile ergeben sich, wenn der Zahnriementrieb durch einen Kettentrieb ersetzt wird, d. h. die Zahnriemenscheiben 30 bis 32 als Kettenräder und die Zahnriemen 33 als Ketten ausgebildet werden.

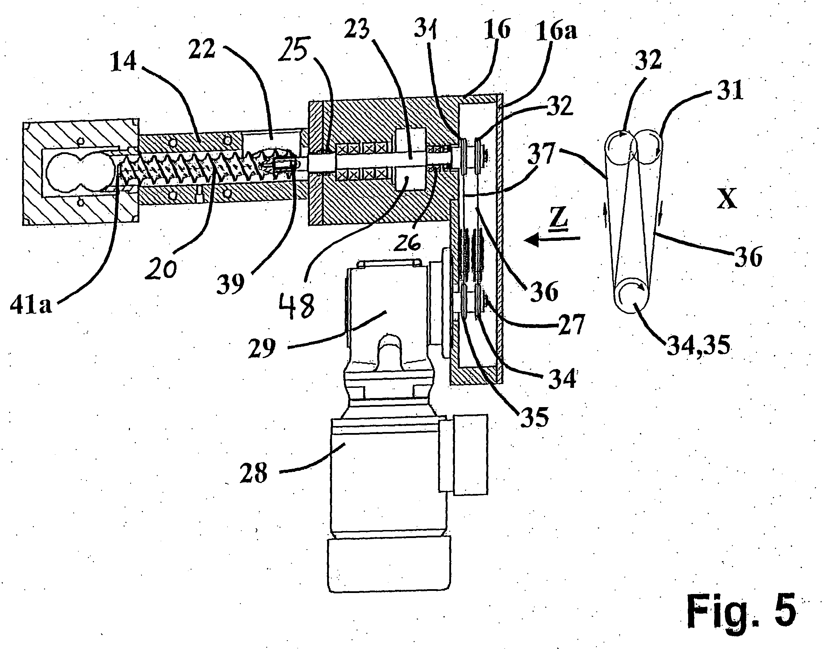

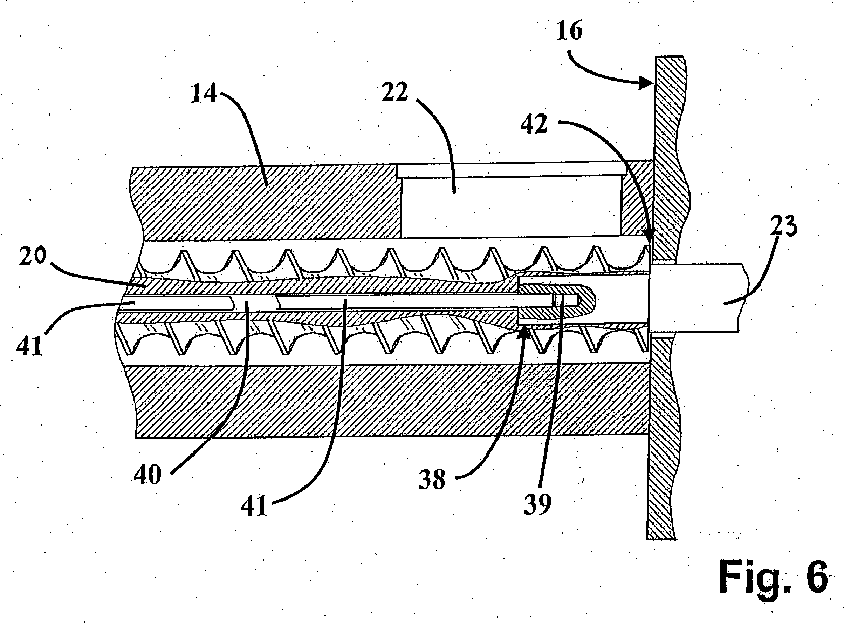

Das Ausführungsbeispiel nach Fig. 5 und 6, in denen gleiche Teile mit denselben Bezugszeichen wie in Fig. 1 bis 4 versehen sind, unterscheidet sich von dem oben beschriebenen Ausführungsbeispiel durch eine andere Gestaltung des Förderschnekkengetriebes. Gemäß Fig. 5 sind auf der Eingangswelle 27 zwei in deren Achsrichtung hintereinander angeordnete Zahnriemenscheiben 34 und 35 befestigt. Außerdem sind die beiden Zahnriemenscheiben 31 und 32 in Richtung ihrer Achsen mit einem Abstand zueinander versetzt, der dem axialen Abstand der Zahnriemenscheiben 34, 35 entspricht. Schließlich sind zwei endlose Zahnriemen 36 und 37 mit Innenverzahnung vorgesehen, wobei der Zahnriemen 36 ohne Umlenkung zumindest teilweise um die Zahnriemenscheiben 31 und 34 und der Zahnriemen 37 ohne Umlenkung zumindest teilweise um die Zahnriemenscheiben 32 und 35 gelegt ist, wie in Fig. 5 mit einer Einzelheit X angedeutet ist, die sich für den Zahnriementrieb beim Blick in Richtung eines Pfeils z ergibt. Die mit diesem Förderschneckengetriebe erzielbaren Vorteile sind analog zu denen, die anhand der Fig. 1 bis 4 beschrieben wurden, mit Ausnahme der Anwendung von zwei Zahnriemen anstatt nur eines Zahnriemens. Wie in Fig. 1 bis 4 werden auch hier die beiden Förderschnecken 20, 21 gleichsinnig angetrieben, wie in der Einzelheit X durch Pfeile angedeutet ist. Alternativ kann auch das Förderschneckengetriebe nach Fig. 5 und 6 ganz oder teilweise als Kettentrieb gestaltet sein.

Bei herkömmlichen Schneckengetrieben sind die Antriebswellen über Kupplungsmuffen mit den Förderschnecken bzw. deren Schneckenwellen verbunden. Derartige Kupplungsmuffen garantieren nicht immer eine feste, wackelfreie und keine Geräusche verursachende Verbindung. Erfindungsgemäß wird daher eine Verbindung vorgeschlagen, die eine derart feste Ankopplung der Förderschnecken an die Antriebswellen sicherstellt, daß auch dann, wenn die Förderschnecken 20, 21 von engen Förderschneckengehäusen 14 umgeben sind, keine Gefahr von Berührungen und dadurch verursachtem Verschleiß, zusätzlichem Stromverbrauch und Geräuschentwicklung besteht.

Fig. 5 und 6 zeigen ein erstes Ausführungsbeispiel für eine solche Verbindung. Das der betreffenden Antriebswelle 23 zugewandte Ende der Förderschnecke 20 ist mit einer stirnseitigen Ausnehmung 38 (Fig. 6) versehen, in die ein ihr zugewandtes Ende der zugehörigen Antriebswelle 23 nach Art einer Steckverbindung und mit engen Toleranzen axial eingesteckt werden kann. Zur Herstellung einer drehfesten Kopplung können dabei die Ausnehmung 38 und das Ende der Antriebswelle 23 mit unrunden Querschnitten versehen oder zusätzlich mit nicht dargestellten, axial fügbaren Nut/-Feder- bzw. Keilnut-Verbindungen versehen sein. Weiterhin ist das der betreffenden Förderschnecke 20 zugewandte Ende der Antriebswelle 23 mit einer von der Stirnseite her koaxial eingebrachten, mit einem Innengewinde versehenen Aufnahmeöffnung 39 und die Förderschnecke 20 mit einer koaxialen, durchgehenden Mittelbohrung 40 versehen. In diese Mittelbohrung 40 wird von der Seite des Extruders 1 her ein Spannstab 41 eingeführt, dessen eines Ende mit einem in die Aufnahmeöffnung 39 passenden Außengewinde und dessen anderes Ende mit einem Spannkopf 41a versehen ist. Der Spannstab 41 wird von der Seite des Extruders 1 her so tief in die Aufnahmeöffnung 39 eingedreht, bis sein Spannkopf 41a fest an der dem Extruder 1 zugewandten Stirnfläche der Förderschnecke 20 oder dem Boden einer in dieser Stirnfläche angebrachten Einsenkung anliegt. Durch Festziehen des Spannstabs 41 wird die Förderschnecke 20 axial fest an die Abtriebswelle 23 herangezogen und mit dieser verbunden und axial verspannt. Dabei ist die Anordnung außerdem so getroffen, daß zwischen dem Getriebegehäuse 16 und der diesem zugewandten Stirnfläche der Förderschnecke 20 ein kleiner Spalt 42 (Fig. 6) verbleibt, der eine Drehnung der Förderschnecke 20 relativ zum Getriebegehäuse 16 ermöglicht. Der Spannstab 41 kann z. B. eine Schraube mit einem Kopf oder eine Gewindestange mit einer aufgeschraubten Mutter als Spannkopf sein.

Die Förderschnecke 21 kann in derselben Weise mit der Antriebswelle 24 verbunden werden.

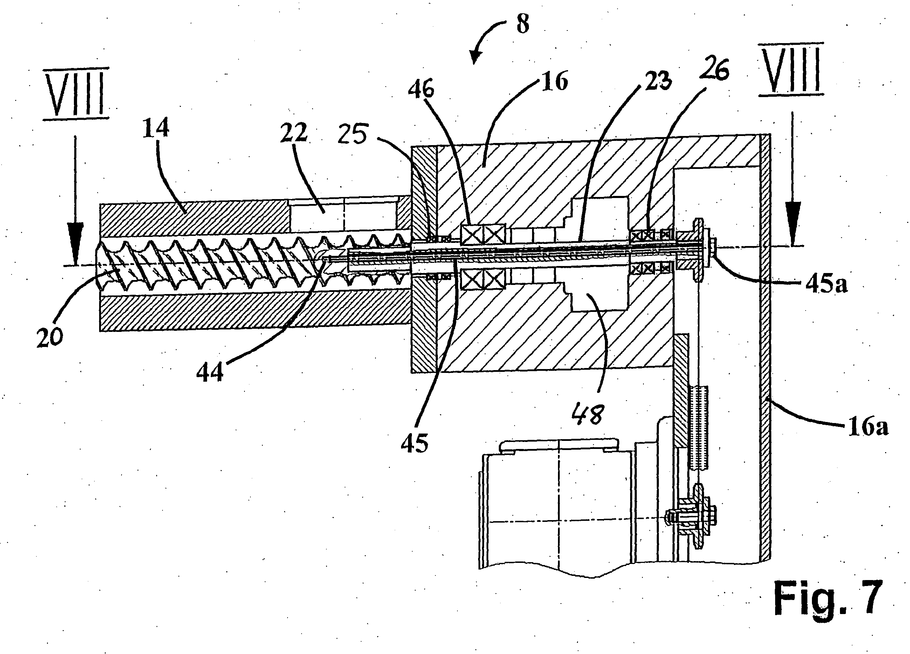

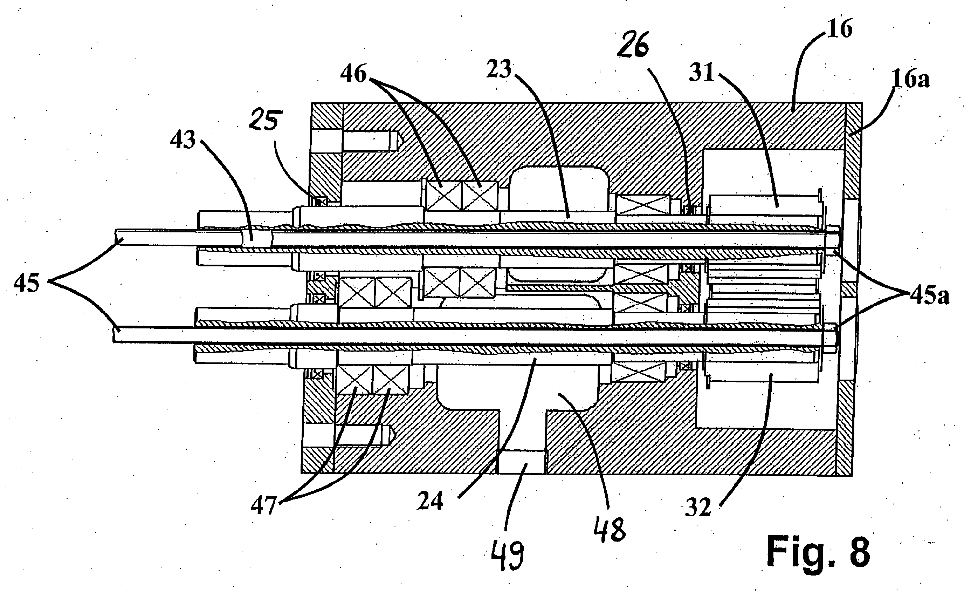

Bei einem zweiten, in Fig. 7 und 8 dargestellten Ausfübrungsbeispiel, bei dem gleiche Teile mit denselben Bezugszeichen wie in Fig. 5 und 6 versehen sind, sind die Antriebswellen 23, 24 mit je einer durchgehenden Mittelbohrung 43 versehen, während die Förderschnecken 20, 21 an dem dem Getriebegehäuse 16 zugewandten Ende eine mit einem Innengewinde versehene Aufnahmeöffnung 44 besitzen. Ein Spannstab 45 mit einem Spannkopf 45a (Fig. 8) am einem Ende und einem in die Aufnahmeöffnung 44 passenden Außengewindeabschnitt am anderen Ende wird in diesem Fall von der Seite des Deckels 16a des Getriebegehäuses 16 her in die Mittelbohrung 43 eingeführt und mit seinem Gewindeabschnitt in die Aufnahmeöffnung 44 eingedreht. Beim Festziehen des Spannstabes 45 legt sich der Spannkopf 45a an die Stirnfläche des im Getriebegehäuse 16 befindlichen Endes der betreffenden Antriebswelle 23, 24 an, wodurch beim weiteren Festziehen des Spannkopfs 45a die zugehörige Förderschnecke 20, 21 axial fest an die am anderen Ende der Antriebswelle 23, 24 vorhandene Stirnfläche herangezogen und auch axial mit der Antriebswelle 23, 24 verspannt wird. Im übrigen ist die Anordnung analog zum Ausführungsbeispiel nach Fig. 5 und 6.

Die beiden Ausführungsbeispiele unterscheiden sich im wesentlichen lediglich dadurch, daß die Montage des Spannstabes 41 im Fall der Fig. 5 und 6 von der Seite des Extruders 1 her erfolgt, während die Montage des Spannstabes 45 gemäß Fig. 7 und 8 von der Seite des Deckels 16a des Lagergehäuses 16 her vorgenommen wird. Dabei versteht sich, daß von den beiden Ausführungsbeispielen in vielfältiger Weise abgewichen werden kann, insbesondere z. B. dadurch, daß sowohl die Förderschnekken 20, 21 als auch die Antriebswellen 23, 24 mit durchgehenden Bohrungen versehen und die Spannstäbe als diese durchsetzende Teile ausgebildet werden. Außerdem kann z.B. die stirnseitige Ausnehmung 38 (Fig. 6) auch in der Antriebswelle 23, 24 vorgesehen und die Förderschnecke 20, 21 mit einem in diese ragenden Ansatz versehen werden. Auch andere axial fügbare Verbindungsmittel zur koaxialen Verbindung der Förderschnecken 20, 21 und Antriebswellen 23, 24 sind möglich, insbesondere ineinander steckbare Steckverbindungselemente. Außerdem können andere Mittel wie z.B. Querstifte vorgesehen werden, um die Spannstäbe 41, 45 in der zugeordneten Aufnahme der jeweiligen Antriebswelle oder Förderschnecke festzulegen. Außerdem ist klar, daß vorzugsweise alle vorhandenen Förderschnecken in gleicher Weise mit den ihnen zugeordneten Antriebswellen axial verbunden und verspannt werden.

Die Antriebswellen 23, 24 sind außer mit den üblichen, z. B. als Radiallager ausgebildeten Lagern 25, 26 mit wenigstens je einem, im Getriebegehäuse 16 angeordneten Rückdrucklager 46, 47 (Fig. 8) gelagert. Die Rückdrucklager 46, 47 sind z. B. als Tandemlager, Kegelrollenlager od. dgl. ausgebildet und dienen dem Zweck, axiale Rückdruckkräfte aufzunehmen und über das Getriebegehäuse 16 abzuleiten, die bei der Förderung der Füllstoffe von der Vorrichtung 8 auf die Abtriebwellen 23, 24 ausgeübt werden könnten. Wie Fig. 8 zeigt, ist das Rückdrucklager 46 der einen Abtriebswelle 23 vorzugsweise axial derart relativ zum Rückdrucklager 47 der anderen Abtriebswelle 24 versetzt, daß in jedem Längenabschnitt stets nur ein Rückdrucklager 46, 47 vorhanden ist. Dadurch ist es möglich, die Abtriebswellen 23, 24 trotz der größeren radialen Abmessungen der Rückdrucklager 46, 47 vergleichsweise eng nebeneinander anzuordnen.

Die Erfindung ist nicht auf die beschriebenen Ausführungsbeispiele beschränkt, die auf vielfache Weise abgewandelt werden können. Das gilt insbesondere für die Ausbildung der Förderschnecken und der Antriebswellen sowie deren Lagerungen. Weiterhin kann die Erfindung, ggf. in entsprechender Abänderung und/oder Ergänzung, auch bei anderen als Doppelschnecken-Extrudern 1 od. dgl. angewendet werden. Möglich wäre ferner, die Zahnriemen oder Ketten in einer von Fig. 1 bis 8 abweichenden Weise um auf den An- und Abtriebswellen befindliche Zahnriemenscheiben oder Kettenräder zu legen und innerhalb des Förderschneckengetriebes Zahn- und Kettentriebe in Kombination zu verwenden. Denkbar wäre auch die Anwendung von mehr als zwei Förderschnecken, falls sich dies aus irgendeinem Grund als zweckmäßig erweisen sollte, in welchem Fall der Zahnriemen- bzw. Kettentrieb in entsprechendes Weise zu ergänzen wäre. Außerdem könnte bei Bedarf vorgesehen werden, die Förderschnecken gegenläufig statt, wie gezeigt und beschrieben, gleichsinnig anzutreiben und andere als die dargestellten Riemen- und Kettentriebe vorzusehen. Außerdem wäre es möglich, die Eingangswelle 27 entfallen zu lassen, den Antriebsmotor 28 zum direkten Antrieb einer der beiden Antriebswellen 23, 24 vorzusehen und die andere Abtriebswelle zur Leistungsverzweigung über Zahnräder oder einen Riemen- oder Kettentrieb mit der direkt getriebenen Abtriebswelle zu koppeln.

Ein besonders vorteilhaftes Ausführungsbeispiel des Erfindung ergibt sich außerdem dann, wenn das Lagergehäuse 16 axial außerhalb der zur Lagerung der Antriebswellen 23, 24 bestimmten Lager 25, 26 mit Dichtmitteln, insbesondere mit die Antriebswellen 23, 24 umgebenden nicht gezeigten Dichtringen versehen und zwischen diesen Dichtringen als Reservoir 48 (Fig. 8) für ein Schmiermittel, insbesondere Schmieröl ausgebildet ist. Dieses Reservoir 48 enthält zweckmäßig einen die Antriebswellen 23, 24 umgebenden und mit den Lagern 25, 26 bzw. 46, 47 in Verbindung stehenden, nach außen durch einen Verschluß 49 abgeschlossene Raum. Dadurch erhält die Lagerung der Antriebswellen 23, 24 eine Notlaufeigenschaft, d.h. bei defekten Dichtungen kann noch eine Zeitlang Schmieröl nachlaufen, so daß die Lager nicht beschädigt werden. Schließlich versteht sich, daß die verschiedenen Merkmale auch in anderen als den beschriebenen und dargestellten Kombinationen angewendet werden können.

## Patentansprüche

1. Extruder mit einem Gestell (2), einer in dem Gestell (2) angeordneten Schneckenanordnung und einer der Schneckanordnung zugeordneten Vorrichtung (8) zur Seiteneinspeisung von Füllstoffen, wobei diese Vorrichtung (8) wenigstens zwei parallele Förderschnecken (20, 21), ein Lagergehäuse (16), in dem mit den Förderschnecken (20, 21) verbundene Antriebswellen (23, 24) drehbar gelagert sind, und mit den Antriebswellen (23, 24) verbundene Antriebsmittel (27 bis 37) aufweist, **dadurch gekennzeichnet, daß** wenigstens eine Förderschnecke (20, 21) und eine ihre zugeordnete Antriebswelle (23, 24) durch axial fügbare Verbindungsmittel direkt koaxial miteinander verbunden und zusätzlich axial gegeneinander verspannt sind.

2. Extruder nach Anspruch 1, **dadurch gekennzeichnet, daß** die Verbindungsmittel (38) ineinander steckbare Steckverbindungselemente enthalten, die in bzw. aneinander zugewandten Stirnseiten der Förderschnecke (20, 21) und der Antriebswelle (23, 24) ausgebildet sind.

3. Extruder nach Anspruch 1 oder 2, **dadurch gekennzeichnet, daß** die gegenseitige axiale Verspannung mit Hilfe eines die Förderschnecke (20) durchragenden Spannstabes (41) erfolgt, der mit einem Ende in einer Aufnahme (39) an einer ihm zugewandten Stirnseite der zugeordneten Antriebswelle (23) festlegbar ist und am entgegengesetzten Ende einen an die Förderschnecke (20) anlegbaren, der axialen Verspannung dienenden Spannkopf (41a) aufweist.

4. Extruder nach Anspruch 2, **dadurch gekennzeichnet, daß** die gegenseitige axiale Verspannung mit Hilfe eines die Antriebswelle (23) durchragenden Spannstabes (45) erfolgt, der mit einem Ende in einer Aufnahme (44) an einer ihm zugewandten Stirnseite der Förderschnecke (20) festlegbar ist und am entgegengesetzten Ende einen an die Antriebswelle (23) anlegbaren, der axialen Verspannung dienenden Spannkopf (45a) aufweist.

5. Extruder nach Anspruch 3, **dadurch gekennzeichnet, daß** die Aufnahme (39) eine mit einem Innengewinde versehene Aufnahmeöffnung ist und der Spannstab (41) ein mit einem Außengewinde versehenes, in die Aufnahme (39) passendes Ende aufweist.

6. Extruder nach Anspruch 4, **dadurch gekennzeichnet, daß** die Aufnahme (44) eine mit einem Innengewinde versehene Aufnahmeöffnung ist und der Spannstab (45) ein mit einem Außengewinde versehenes, in die Aufnahme (44) passendes Ende aufweist.

7. Extruder nach einem der Ansprüche 1 bis 6, **dadurch gekennzeichnet, daß** die Antriebsmittel (27 bis 37) eine Antriebseinheit (28, 29) und einen zwischen dieser und den Antriebswellen (23, 24) angeordnetes Förderschneckengetriebe aufweisen, daß als Zahnriemen- und/oder Kettentrieb ausgebildet ist.

8. Vorrichtung nach Anspruch 7, **dadurch gekennzeichnet, daß** das Förderschneckengetriebe eine Antriebswelle (27) mit zwei axial versetzt angeordneten Zahnriemenscheiben (34, 35) aufweist, an den beiden Abtriebswellen (23, 24) je eine Zahnriemenscheibe (31, 32) befestigt ist, wobei die eine Zahnriemenscheibe (31) mit einem entsprechenden axialen Versatz relativ zur anderen Zahnriemenscheibe (32) angeordnet ist, und zwei Zahnriemen (36, 37) vorgesehen sind, die um je eine Zahnriemenscheibe (34 bzw. 35) der Antriebswelle (27) und eine zugehörige Zahnriemenscheibe (31, bzw. 32) einer der Abtriebswellen (23, 24) gelegt sind.

9. Vorrichtung nach Anspruch 7, **dadurch gekennzeichnet, daß** das Förderschneckengetriebe eine Antriebswelle (27) mit einer Zahnriemenscheibe (30) aufweist, an beiden Abtriebswellen (23, 24) je eine Zahnriemenscheibe (31, 32) befestigt ist und ein um die Zahnriemenscheiben (31, 32, 33) der Antriebswelle (27) und der beiden Abtriebswellen (23, 24) gelegter Zahnriemen (33) vorgesehen ist.

10. Vorrichtung nach Anspruch 8 oder 9, **dadurch gekennzeichnet, daß** die Zahnriemenscheiben (30 bis 32 und 34, 35) durch Kettenräder und die Zahnriemen (33, 36, 37) durch Ketten ersetzt sind.

11. Vorrichtung nach einem der Ansprüche 7 bis 10, **dadurch gekennzeichnet, daß** die beiden Abtriebswellen (23, 24) mittels wenigstens je eines Rückdrucklagers (46, 47) gelagert sind.

12. Vorrichtung nach Anspruch 11, **dadurch gekennzeichnet, daß** die Rückdrucklager (46, 47) mit axialem Versatz relativ zueinander angeordnet sind.

13. Vorrichtung nach einem der Ansprüche 1 bis 12, **dadurch gekennzeichnet, daß** der Zahnriemen- und/oder Kettentrieb in einem zwischen zwei Stützplatten (9) angeordneten Getriebegehäuse (16) untergebracht ist.

14. Vorrichtung nach Anspruch 13, **dadurch gekennzeichnet, daß** die beiden Stützplatten (9) durch wenigstens einen Abstandhalter (12) zu einer Baueinheit miteinander verbunden sind.

15. Vorrichtung nach Anspruch 13 oder 14, **dadurch gekennzeichnet, daß** die Stützplatten (9) mit randoffenen Aussparungen (11) versehen sind, die ihrer Montage an rohr- oder stangenförmigen Gestellteilen (10) dienen.

16. Vorrichtung nach einem der Ansprüche 13 bis 15, **dadurch gekennzeichnet, daß** sie seitlich angebrachte Führungselemente (19) aufweist und mit diesen auf an den Stützplatten (9) vorgesehenen Tragschienen (18) verschiebbar abgestützt ist.

17. Vorrichtung nach einem der Ansprüche 1 bis 16, **dadurch gekennzeichnet, daß** er ein Lagergehäuse (16) mit zur Lagerung der Antriebswellen (23, 24) bestimmten Lagern (25, 26) und ggf. weiteren Lagern (46, 47) sowie axial außerhalb der Lager (25, 26, 46, 47) angeordneten Dichtmitteln aufweist und das Lagergehäuse (16) zwischen den Dichtmitteln als Reservoir (48) für ein Schmiermittel ausgebildet ist.

18. Vorrichtung nach Anspruch 17, **dadurch gekennzeichnet, daß** das Reservoir (48) als ein die Antriebswellen (23, 24) umgebender, mit einem Verschluß (49) versehener Raum ausgebildet ist.
